# EUROPEAN PATENT APPLICATION

(11) **EP 0 690 599 A2**
(43) Date of publication of application: **03.01.1996**
(21) Application number: 95304323.9
(22) Date of filing: 21.06.1995
(51) Int. Cl.: H04L 29/06

(54) **Application programming interface for distributed processing in networks**

(30) Priority: 30.06.1994 US 268399
(71) Applicant: AT&T Corp., New York, NY 10013-2412 (US)
(72) Inventor: Garrick, Richard James, Middletown, NJ 07748 (US)
(74) Representative: Johnston, Kenneth Graham

(57) **Abstract**

An application program interface (API) and middleware library converts stream oriented protocol to message oriented protocol, multiplexes multiple logical connections between client and server platforms over a single virtual circuit, and provides transparent transport of network communications between the client and server platforms.

## Description

### TECHNICAL FIELD

This invention relates to an applications programming interface for distributed processing in networks. More particularly, this invention relates to an applications program interface and associated middleware library which converts stream oriented protocol to message oriented protocol, and which multiplexes multiple logical connections between client and server platforms over a single virtual circuit.

### BACKGROUND OF THE INVENTION

A majority of communication network architectures currently in use utilize layered protocol architectures to accomplish network communications. Typically, the layers are arranged in a hierarchical configuration. The functions of lower layers are to provide a connection between users or processes, such as a terminal user or a data application program. The functions of the upper layers are to provide accurate data exchanges between the users or processes. Generally, each layer utilizes different protocols to perform their designated function.

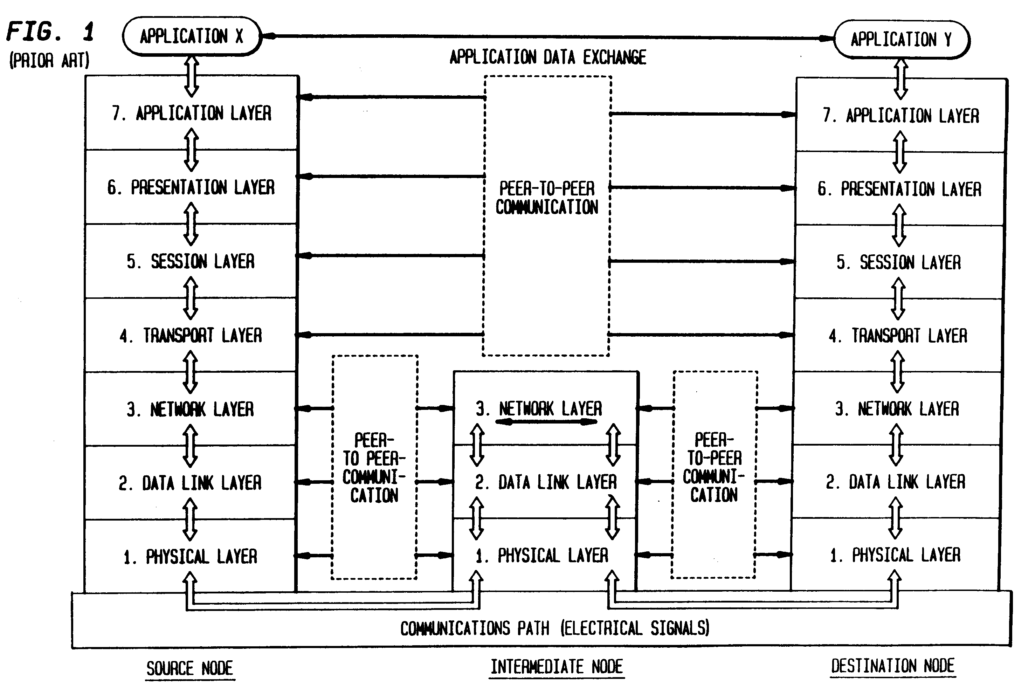

Fig. 1 illustrates a common layered architecture known as the Open System Interconnection (OSI) Reference Model which utilizes a seven layer architecture. The architecture shown represents a logical connection between data applications X and Y, with one intermediate node. At the end points, information flows through all seven layers, but at the intermediate node or nodes, information passes through the lower three layers. Fig. 1 also illustrates peer-to-peer communications between corresponding layers.

The lower three layers, namely the physical, data link and network layers, provide transparent connections between users and operate primarily on a hop-by-hop basis, handling communications over individual data links between nodes. The upper three layers, namely the application, presentation and session layers, ensure that information is transferred in the proper format. The middle layer, i.e., the transport layer, is an interface between the upper and lower layers and ensures a transparent end-to-end logical connection between data applications.

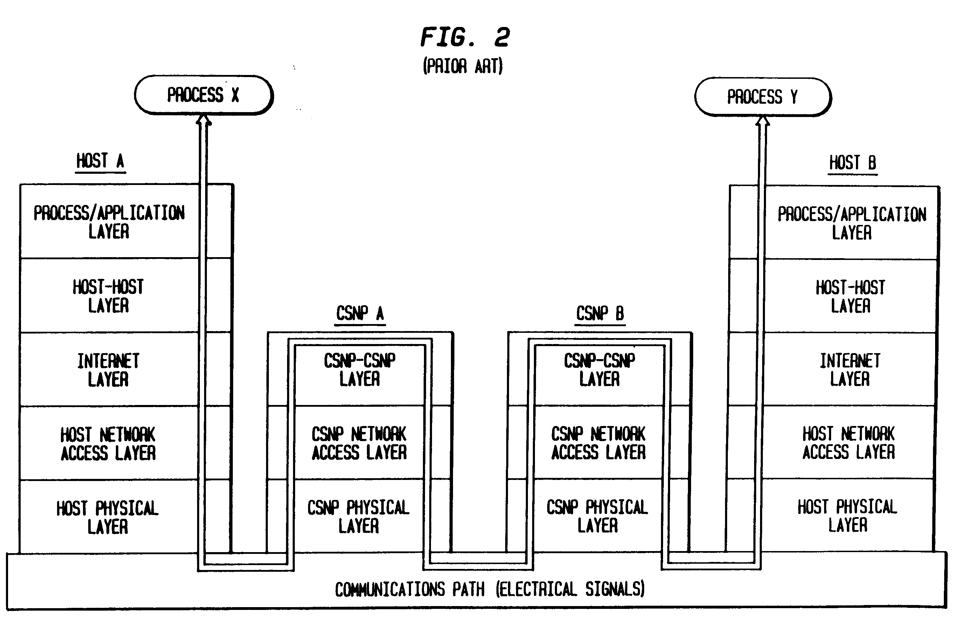

Fig. 2 illustrates another example of a layered architecture known as the DoD Reference Model. The DoD Reference Model utilizes a four layer architecture and was developed for use with a wide variety of heterogeneous host computers interfaced to a communications subnetwork via communication processors. Such communication processors include interface message processors (IMP's) and communications subnet processors (CSNP's). The four layers of the DoD Reference Model are the network access layer, the internet layer, the host-host layer, and the process/data application layer.

Numerous communication networks utilizing the above described architectures are currently in use throughout the world. Such networks range from local area networks servicing individual buildings or campuses to wide area networks spanning the globe. Some of these networks are dedicated for specific applications, while others are primarily used to access functions at remote locations, such as resource sharing in client/server applications. In such networks, there are a multitude of platforms using different operating systems, e.g., UNIX, VAX/VMS, and DOS/WINDOWS, and different network protocols, e.g., TCP/IP, DECnet, and APPC/LU6.2. As a result, seamless distributed processing is difficult to achieve between data applications in such a multivendor, multiprotocol environment. Methodologies such as terminal emulation, gateways and batch file transfer have been used to provide interoperability between vendor platforms. However, such methodologies fail to provide seamless connections between peer applications, and they are user intensive.

Interfaces have also been used to improve the interoperability between platforms. For example, the transport-level interface (TLI) or the socket interface have been utilized in client/server applications. These interfaces are sets of functions which enable network applications to be transport independent. However, such interfaces utilize network protocols which transfer data in a byte oriented stream mode. As a result, it is necessary for the local data application to create individual virtual circuits when communicating with the same remote data application. In addition, each data application is required to manage the potential large number of virtual circuits thereby increasing the CPU cycle time allotted by each data application to manage network communications. In wide scale client/server applications, such interfaces do not diminish the burden imposed on both the client and server platforms to manage the numerous virtual circuits established. In addition, such interfaces typically are not user friendly and require experienced network programmers to achieve platform interoperability.

To provide distributed application interoperability between data applications residing in different vendor platforms and utilizing the various layered network infrastructures having multiple protocols, application programming interfaces and associated message-oriented middleware have been developed. Message-oriented middleware is a layer of application programming interface (API) which reside between data applications and network infrastructure to provide a seamless connection between peer applications.

An example of message-oriented middleware is the message EXPRESS interface produced by Horizon Strategies, Inc. of Needham, Mass. The message EXPRESS interface is resident between a standard vendor API and the business (or data) application and is interactive with the standard vendor API to resolve error conditions which the standard vendor API would report to the business application. However, the message EXPRESS interface utilizes current network topologies which requires private virtual circuits for each application and a byte stream oriented protocol such as transmission control protocol (TCP).

In addition, during development of data applications, designers are often required to resolve network errors, peer process errors or other non-data application problems. In correcting these problems, the data application program becomes riddled with system level services making it difficult to develop, test and maintain the data application.

Therefore, a need exists for client/server application programming interfaces resident between client and server platforms, to enhance multi-platform and multi-protocol interoperability, and to significantly reduce virtual circuit management required by both the client and server platforms, while providing transparent transport between applications resident on the client and server platforms.

### SUMMARY OF THE INVENTION

The present invention provides an application program interface for transport independent communications between client-server applications. The application program interface includes means for establishing a single virtual circuit between a plurality of client applications logically connected to a server application. The client applications are resident on a client platform and the server application is resident on a remote server platform. The interface also includes means for multiplexing and demultiplexing data communications between the client and server applications on the virtual circuit. Typical network based data communications are in a byte stream oriented protocol, thus for multiplexing purposes the means for multiplexing and demultiplexing data communications preferably converts data in the byte stream mode to a message oriented data packet. Identification of which client application requested data or information from the server application is provided by identification codes or numbers which are assigned to each client application. The identification code is included in the message packet.

In a preferred embodiment, the means for establishing a single virtual circuit includes a first interface configured to provide an interprocess communication based virtual circuit, and a second interface configured to provide an internetwork based virtual circuit.

The present invention also provides a communication network for client-server applications. The communication network includes a server platform having a server application and a communication broker resident thereon, and at least one client platform logically connected to the server platform. The at least one client platform has at least one client application and a communication broker resident thereon.

Preferably, the communication brokers are resident between the client and server applications to provide network communications between the applications which are transparent to the applications. The communications are also provided to reduce virtual circuit management by multiplexing data communications between the applications on a single virtual circuit. To accomplish these functions the communication brokers are configured to include means for establishing the single virtual circuit between the at least one client application and the server application, and means for multiplexing and demultiplexing data communications between the applications on the single virtual circuit.

A traveler information service network is provided to permit clients (e.g., customers) to obtain personalized travel information, such as a point-to-point travel routes, or to obtain generalized travel information, such as local traffic and weather conditions. The traveler information network includes at least one information provider logically connected to a data collection platform and configured to transfer data therebetween, a server platform configured to receive the traveler data from data collection platform, and at least one client platform logically connected to the server platform. The server platform has a server application and communication broker resident thereon. The at least one client platform having at least one client application and a communication broker resident thereon.

The present invention also provides a method for interfacing data communications between client and server applications. The method includes the following steps, establishing a single virtual circuit between a plurality of client applications and a server application, converting byte stream data from the plurality of client applications to message packets, and multiplexing the message packets onto the single virtual circuit for transfer to the server application. Once the message packets are transferred to the server application, the server application demultiplexes the message packets and converts the message packets to byte stream data.

### BRIEF DESCRIPTION OF THE DRAWINGS

Preferred embodiments of the invention are described hereinbelow with reference to the drawings wherein:
Fig. 1 illustrates a prior art layered architecture for a communication network;
Fig. 2 illustrates another prior art layered architecture for a communication network;
Fig. 3 is a block diagram of a multi-platform communication network incorporating the communication broker according to the present invention;
Fig. 4 illustrates a communication sequence between client and server platforms;
Fig. 5 is a flow diagram of connection table processing for establishing virtual circuits;
Fig. 6 is a flow diagram of connection table processing for closing virtual circuits;
Fig. 7 is a block diagram of an alternative embodiment of a multi-platform communication network according to the present invention; and
Fig. 8 is a block diagram of a communication network similar to Fig. 3, illustrating traffic-weather client-server applications.

### DETAILED DESCRIPTION

The present invention provides an application program interface (API) interactive with a middleware library which abstracts system oriented services out of network based data applications to simplify the development of the network based data applications. Simplification of network based applications allows system developers to reduce the development and testing time necessary to bring a high quality data application program to market.

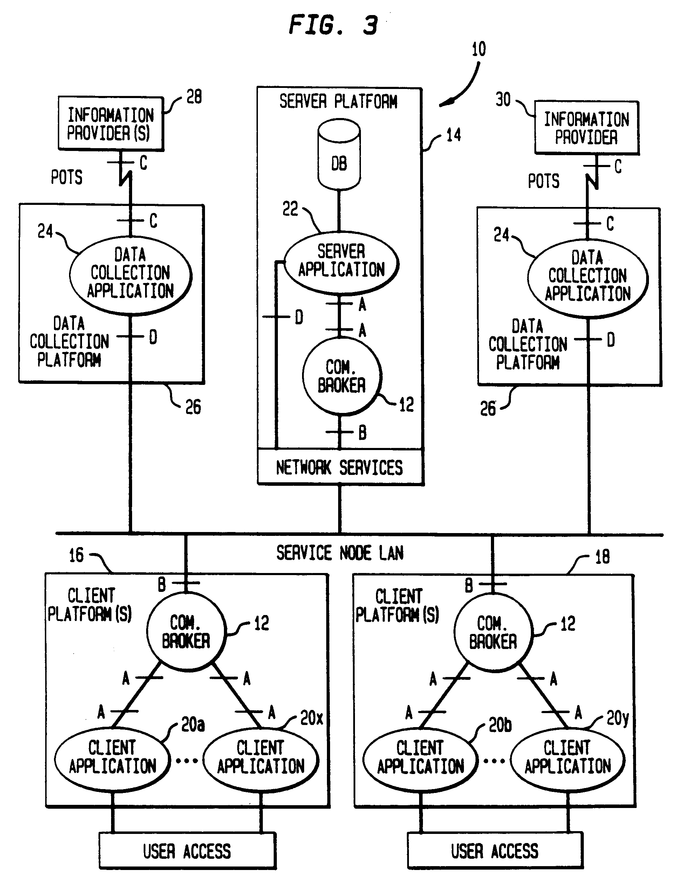

Fig. 3 illustrates a multi-platform client-server communication architecture 10 employing communication brokers 12 between a server platform 14 and different client platforms 16 and 18. The communication broker 12 includes the API and an associated middleware library. The API has two components, the first component is a communication broker to client or server application interface, identified in Fig. 3 as interface "A", and the second component is a communication broker to communication broker interface, identified in Fig. 3 as interface "B".

The A interface component provides an interprocess communication (IPC) based virtual circuit between the client applications 20 and the communication broker 12. The A interface is provided to abstract IPC communication services out of the application and to store them in a reusable middleware library module (hereinafter referred to as "the IPC module"). The IPC module resides in the communications broker 12. The primitives for the A interface component include the following:
(1) (int) ipc_ref = ipc_server_init((long)network_address)
(2) (int) ipc_ref = ipc_client_init((long)network_address)
(3) (int) status = ipc_write((char*)buf,(int)buf_length,(int)ipc_ref)
(4) (int) status = ipc_read((char**)buf,(int*)buf_length,(int)ipc_ref)
(5) (int) status = ipc_close((int)ipc_ref)

The B interface component provides an internetwork based virtual circuit, such as a transmission control protocol/internet protocol (TCP/IP) based virtual circuit, between communication brokers 12. The B interface is provided to abstract network communication services out of the application and to store them in a reusable middleware library module (hereinafter referred to as "the network module"). The network module also resides in the communication broker 12. The primitives for the B interface component include the following:
(6) (int) net_ref = net_server_init((long)network_address)
(7) (int) net_ref = net_client_init((long)network_address)
(8) (int) net_ref = net_write((char*)buf,(int)buf_length,(int)net_ref)
(9) (int) status = net_read((char**)buf,(int*)buf_length,(int)net_ref)
(10) (int) status = net_close((int)net_ref)

Primitives 1 and 6 initialize server application communication, i.e., these primitives perform server endpoint initialization and instruct the server application to begin to listen for a client connection request. Primitives 2 and 7 initialize client application communication, i.e., these primitives perform client endpoint initialization and establish a virtual circuit with the server application.

Primitives 3 and 8 are communication write functions used by the client application to send requests to the server application, and used by the server application to send responses to the client application. Primitives 4 and 9 are communication read functions used by the server application to read requests from the client application, and used by the client application to read responses from the server application. In primitives (3) and (4) the buffer message contains a complete data unit defined by the particular application protocol.

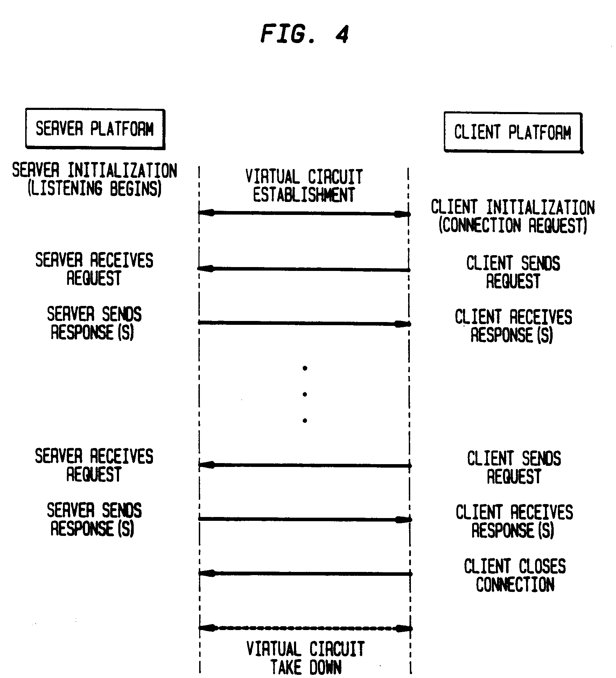

Primitives 5 and 10 are virtual circuit close functions which take down the virtual circuit between the client and server applications. Utilizing these API components, network transport and interprocess communications are transparent to the client and server applications requiring such transport. Fig. 4 illustrates a network communication model which implements transparent transport between client and server applications by the above described A and B interface components, i.e., the API of the present invention.

The middleware associated with these primitives is stored in a middleware library within each communication broker. Appendix A represents code which performs the desired functions associated with each primitive.

As described above, prior art networks typically utilize virtual circuit protocols to transport data in a byte oriented stream mode. As noted above, these protocols require the local client applications to establish individual virtual circuits when communicating with the same remote server application. Thus, for wide scale client/server applications, virtual circuit management on a per client basis inundates both the client and the server platform resources.

Referring to Fig. 3, the communication broker of the present invention is configured to multiplex and demultiplex communication data between a plurality of client applications 20a-20x or 20b-20y and a server application 22 on a single virtual circuit. As shown, each client platform 16 and 18 has a plurality of client applications associated therewith, which are identified as applications 20a-20x for platform 16, and 20b-20y for platform 18. Multiplexing data communications between applications reduces the time allocations imposed on the client and server platforms to manage the virtual circuits between the client platforms and the server platform.

In order to multiplex the logical connections, the communication broker converts the byte stream oriented protocol (e.g., TCP) to a message oriented format. This function is performed by the write and read primitives and associated middleware library described above. A more detailed description of the operation of the communication broker will be described below.

An example of the multiplex communications between client and server applications is described below with reference to Fig. 3. To initiate communications between client application 20a associated with the local client platform 16 and remote server application 22 on remote server platform 14, the client application 20a issues, for example, a net_client_init() function call which includes the addressing information for the target remote server application 22. This request is fielded by the client platform communication broker 12 via interprocess communication (IPC) along interface A. Communication broker 12 initially determines whether a virtual circuit exists between the client and server applications. When a communication broker on the local platform creates a virtual circuit between the local client application and a remote server application, the communication broker logs the connection in a connection table.

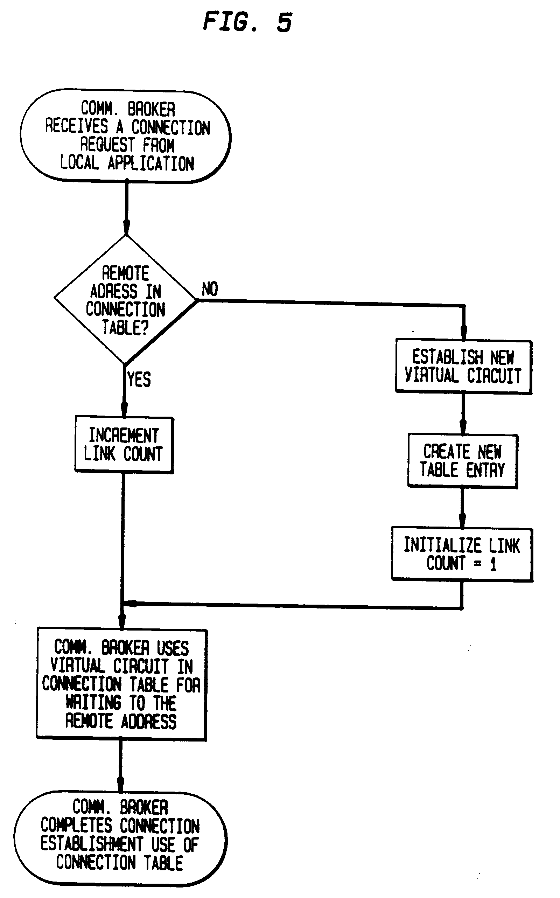

Generally, connection table entries are composed of the remote network address of the virtual circuit, a socket descriptor used for writing to and reading from the virtual circuit, and a logical connection (or link) count indicating how many logical connections are using the virtual circuit. Thus, before the communication broker 12 creates a virtual circuit on the A and B interfaces, the communication broker compares the requested logical connection with the connections logged in the connection table to determine if a virtual circuit exists between the local and target remote applications. If a virtual circuit exists, the communication broker utilizes the socket descriptor in the table for communication and increments the link count. If a virtual circuit does not exist, one is created and the connection is logged in the connection table. In this instance the link count is initialized to 1. Fig. 5 illustrates the above described flow for connection table processing for establishing virtual circuits.

Once the communication broker determines that a virtual circuit exists or creates a virtual circuit between applications, the communications broker 12 on the local client platform 16 assigns the next available logical channel ID to the local client application's A interface. Outgoing messages from the A interface are assigned the logical channel ID, and incoming messages from the B interface are dispatched to the appropriate local application 20a by the logical channel ID. A logical channel ID table is maintained in the communication brokers on both sides of the virtual circuit to enable the multiplexing and demultiplexing operations.

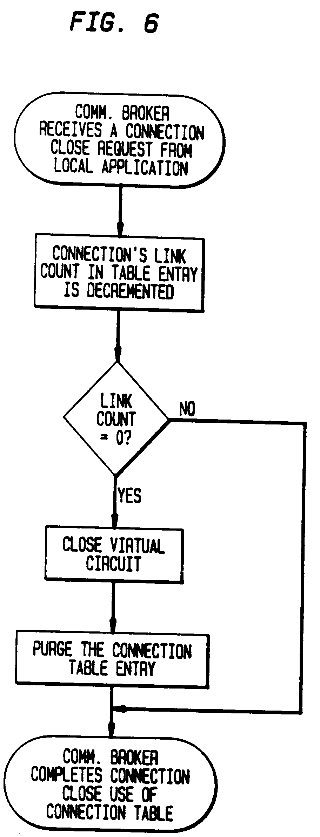

When the local client application 20a no longer needs the virtual circuit connection to the remote server application 22, the local client application 20a issues a net_close() function call which is fielded by the client platform communication broker 12. This results in the logical connection ID used being freed in both platforms logical connection table for the virtual circuit used. In addition, the communication broker decrements the link counter. If there are no other logical circuits using the virtual circuit, i.e., if the link counter is decremented to zero, the virtual circuit would be closed and removed from the connection table for each communication broker. Fig. 6 illustrates the above described flow for connection table processing for closing virtual circuits.

### WRITE CONTROL FLOW

To transport information to the remote server application 22, the local client application 22, creates network packets which include a message (the information) and the message length. The message contains an application protocol based data unit. The local client application then calls, for example, a net_write()function, which causes the network packets to be sent along the A interface via interprocess communication (e.g., a byte stream oriented protocol). The communications broker 12 resident on client platform 16 fields the network packets and converts the byte stream data to a message oriented data format. If the message to be transmitted is larger than the maximum segment size supported by the transport mechanism, i.e., interface B, the communication broker fragments the message into maximum segment size minus 2 (in bytes). Each fragment is prepended with a one byte logical channel ID and a one byte next expected sequence number. The last packet in the sequence is given a next expected sequence number of zero which indicates that no more segments are to be expected. Messages which fit into one transport segment bypass fragmentation and the next expected sequence number is set to zero. By allocating more space for the logical channel ID or the next expected sequence number, arbitrary sized messages can be supported for an arbitrary number of simultaneous connections.

### READ CONTROL FLOW

To read information from the remote server application 22, the communications broker 12 in the local client platform 16 reads in the network packets on the single virtual circuit, i.e., the B interface, and sorts the packets by logical connection ID. The communications broker 12 strips off the logical channel ID and the sequence numbers and stores the fragments in a buffer memory until the packet with a next expected sequence number of zero is received. When the last packet is received and stored in the buffer memory, a block of message memory is allocated to support the fragments currently in the buffer. The complete message in the buffer is then transferred to the local client application (e.g., application 20a-20x or 20b-20y) identified by the logical connection ID via the A interface. The message is retrieved by, for example, a net_read() function initiated by the local client application.

In addition to the A and B interface components of the API of the present invention, other known interfaces may be utilized to complete the network. As shown in Fig. 3, an information provider to data collection interface, identified as interface "C", and a data collection interface to server application interface, identified as interface "D" are provided as hosting interfaces.

The C interface imports data into the data collection application 24 resident on data collection platform 26 from various information providers 28 and 30, e.g., travel and weather information providers. The C interface may utilize known file transfer protocols, such as a 1K-XModem error correcting file transfer protocol over dialed connections for transferring unstructured data files. An example of a suitable protocol is PROCOMM PLUS® for Windows, which is a commercial software package installed on the data collection platform 26.

Referring again to Fig. 3, the D interface transfers the information provider data from the data collection application 24 to the server application 22. Preferably, the D interface is composed of a network file service (NFS) on the TCP/IP protocol stack which transfers the data files. An example of a suitable interface is the Chameleon NFS for WINDOWS which is also a commercial software package installed on the data collection platform 26.

The Linkage between the C and D interfaces is provided by the data collection application and is preferably a 10 line WINDOWS Aspect Script contained in the PROCOMM PLUS® environment. The Aspect Script buffers the incoming data files on the data collection platform during file transfers and when the file transfer is complete, the file is copied to a virtual drive supported by the network file service corresponding to a file system on the server platform 14.

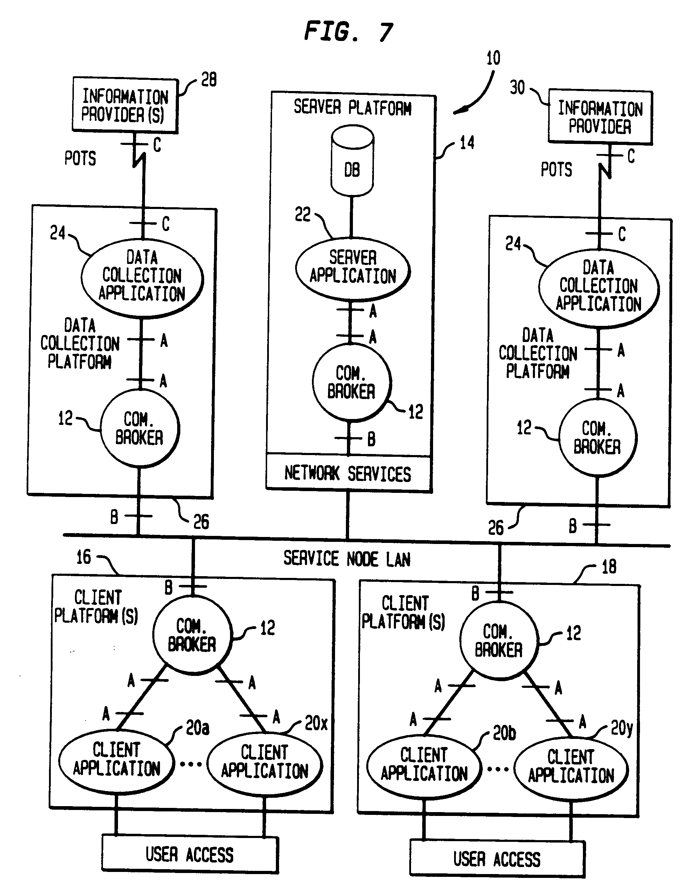

In an alternative embodiment, shown in Fig. 7, the D interface may be replaced with the A and B interfaces and corresponding communication brokers 12. The A and B interfaces and the communication brokers 12 operate as described above to multiplex and demultiplex communications on a single virtual circuit, as well as providing transparent network communications between the client and server applications.

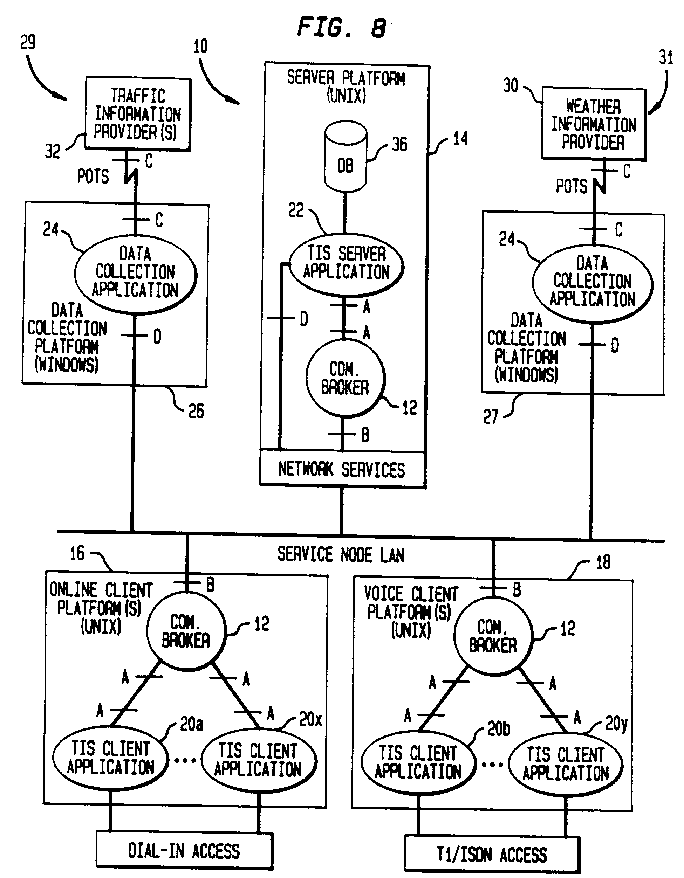

Fig. 8 illustrates an exemplary client-server application incorporating the communication brokers of the present invention. The client-server application shown is a traveler information service (TIS) composed of traffic and weather data servers 29 and 31, multiple user client platforms 16 and 18, and multiple real-time data feeds, such as interfaces A and B. The traveler information service is capable of supplying users (clients) with personalized (e.g., home-to-work travel information) and/or general travel reports (e.g., local traffic and weather). The network architecture for the TIS is similar to the network architecture shown in Fig. 3 and described above.

In operation, traffic and weather data are transferred by information providers 32 and 34 respectively to corresponding data collection platforms 26 and 27 via the C interface. The traffic and weather data are transferred on the D interface to the TIS server application 22 resident on the server platform 14. The traffic and weather data are segmented and recombined using known value added process techniques and are then stored in TIS server platform database 36. Value added processing facilitates transmission of personalized traveler reports or information from the server platform to the client when requested by the client.

Referring to Figs. 4 and 8, the operation of the TIS network will be described with the server platform 14 initialized by primitives 1 and 6 described above and listening for client requests. To retrieve a traveler report, the client accesses the TIS client application 20a via known dial-in or T1/ISDN access techniques and makes a request for travel and/or weather data. The TIS client application 20a makes a network request by issuing, for example, a ipc_client_init() function call which interpolates addressing information for the target remote application into the network packet (e.g., the byte stream data) and causes the data to be sent on the A interface via interprocess communication. The communication broker 12 in the local client platform 16 fields in the local client platform 16 the local application network request and checks the virtual circuit connection table to determine if a virtual circuit exists between the local client application 20a and the remote server application 22. If a virtual circuit does not exist, one is created by issuing the int net_ref = net_client_init((long)network_address) primitive over the B interface.

Once the virtual circuit is established, the communication broker 12 in the local platform 16 issues the data write primitive (i.e., the int net_ref = net_write ((char*)buf, (int)buf_length, (int)net_ref) primitive) which converts the byte oriented stream data to the message oriented data packets and transfers the data request over the B interface. The communication broker 12 resident on the sever platform 14, fields the data request and issues the data write primitive (i.e., the int status = ipc_write ((char*)buf, (int)buf_length, (int)ipc_ref primitive) which sends the data to the server application 22 via interface A.

The server application 22 responds to the data request and sends the requested data onto the A interface using the standard byte stream oriented protocol. The communication broker 12 on the server platform 14 fields the send data request and issues the data write primitive (e.g., the int net_ref = net_write((char*)buf, (int)buf_length, (int)net_ref primitive). Issuing the data write primitive converts the byte oriented data stream to a message oriented data stream, as described above, and transfers the information to the local client platform 16 via the B interface.

The communication broker 12 in the local platform 16 reads the server response by issuing a data read primitive (i.e., the int status = net_read((char**)buf, (int*)buf_length, (int)net_ref primitive), which reconverts the message oriented data stream to the byte oriented data stream and transfers the information to the proper TIS client application 20 via the A interface. The TIS client application 20 then processes the data received and transfers data to the client in the desired format via known dial-in or T1/ISDN access techniques.

What has been described is merely illustrative of the application of the principles of the present invention. Other arrangements and methods can be implemented by those skilled in the art without departing from the spirit and scope of the present invention.

## Claims

1. An application interface for transport independent communications in client-server applications, which comprises:
means for establishing a single virtual circuit between a plurality of client applications associated with a client platform and a server application associated with a server platform; and
means for multiplexing and demultiplexing data communications between the client and server applications on said virtual circuit.

2. The application interface according to claim 1, wherein said means for multiplexing and demultiplexing data communications includes means for converting data in a byte stream mode to a message oriented format.

3. The application interface according to claim 1, wherein said means for establishing a single virtual circuit includes a first interface configured to provide an interprocess communication based virtual circuit, and a second interface configured to provide an internetwork based virtual circuit.

4. A communication network for client-server applications, comprising:
a server platform having a server application and a communication broker resident thereon;
at least one client platform logically connected to said server platform, said at least one client platform having at least one client application and a communication broker resident thereon;
wherein said communications brokers include means for establishing a single virtual circuit between said at least one client application and said server application, and means for multiplexing and demultiplexing data communications between said at least one client application and said server application on said single virtual circuit.

5. A traveler information provider network, which comprises:
at least one information provider logically connected to a data collection platform and configured to transfer data therebetween;
a server platform configured to receive said traveler data from said data collection platform, said server platform having a server application and communication broker resident thereon;
at least one client platform logically connected to said server platform, said at least one client platform having at least one client application and a communication broker resident thereon;
wherein said communication brokers include means for establishing a single virtual circuit between said at least one client application and said server application, and means for multiplexing and demultiplexing data communications between said at least one client application and said server application on said single virtual circuit.

6. A method for interfacing data communications between client and server applications, comprising:
establishing a single virtual circuit between a plurality of client applications and a server application;
converting byte stream data from said plurality of client applications to message data packets and multiplexing said message data onto said single virtual circuit for transfer to said server application;
demultiplexing said message data packets at said server application;
converting said message data packets to byte stream data; and
transferring said byte stream data to said server application.

7. The method according to claim 6 further comprising taking down said single virtual circuit after data is transferred between said plurality of client applications and said server applications.
